# EUROPÄISCHE PATENTSCHRIFT

(11) **EP 0 934 190 B1**
(45) Veröffentlichungstag und Bekanntmachung des Hinweises auf die Patenterteilung: **17.12.2003**
(21) Anmeldenummer: 97946753.7
(22) Anmeldetag: 22.10.1997
(51) Int. Cl.: B62D 65/00

(54) **CPKD-KAROSSERIE**
CPKD CAR BODY
CARROSSERIE EN PIECES DETACHEES PEINTES

(30) Priorität: 30.10.1996 DE 19644989
(43) Veröffentlichungstag der Anmeldung: 11.08.1999
(73) Patentinhaber: Volkswagen Aktiengesellschaft, 38436 Wolfsburg (DE)
(72) Erfinder: LORENZ, Heinrich, D-38448 Wolfsburg (DE); WEBER, Gerald, D-38444 Wolfsburg (DE); SCHNELLINGER, Walter, D-38556 Bokensdorf (DE); NICOLETTI, Nicola, D-38448 Wolfsburg (DE); SCHRADER, Maik, D-38448 Wolfsburg (DE); LEHNER, Hans-Tino, D-38518 Gifhorn (DE)
(74) Vertreter: Fritz, Edmund Lothar, Dipl.-Chem.
(86) Internationale Anmeldenummer: EP9705832
(87) Internationale Veröffentlichungsnummer: WO98018670

(56) Entgegenhaltungen:
- EP-A- 0 240 470
- US-A- 4 978 164
- STEPHANIE J. MURASKY: "american autos in the clinch" MACHINE DESIGN, Bd. 62, Nr. 7, April 1990, CLEVELAND,OHIO,US, Seiten 48-54, XP000137541
- AHLERS-HESTERMANN G.: 'Stanznieten und Durchsetzfügen für den Leichtbau' LEICHTMETALLE IM AUTOMOBILBAU 95/96 - SONDERAUSGABE ATZ UND MTZ

## Beschreibung

Die Erfindung betrifft ein Verfahren zum Herstellen einer mit einer Lackschicht beschichteten Karosserie gemäß dem Oberbegriff des Anspruchs 1 sowie ein Verfahren zur Mischfertigung einer mit einer Lackschicht versehenen geformten Karosserie beziehungsweise Karosserieuntereinheit.

Die Fertigung von Kraftfahrzeugkarosserien hat den Ablauf Rohbau → Lackiererei → Montage, wobei je nach Fertigungskonzept verschiedene Varianten möglich sind. Eine übliche Variante ist die sogenannte CKD-Fertigung (Completely Knocked Down), bei der die einzelnen Rohbauteile (und andere Kraftfahrzeugteile) an einem oder mehreren ersten Standorten gefertigt und an einem weiteren Standort durch Schweißen zusammengefügt und anschließend lackiert werden. Diese Fertigung wird insbesondere dann eingesetzt, wenn die produzierte Stückzahl es nicht rechtfertigt, daß vor Ort mit Pressen der gesamte Rohbau gefertigt wird. Eine Abwandlung hiervon ist die sogenannte SKD-Fertigung (Semi Knocked Down), bei der in einer ersten Produktionsstätte der Rohbau hergestellt und lackiert wird, der dann mehr oder weniger weiter vervollständigt in einer zweiten Produktionsstätte mit den weiteren Kraftfahrzeugteilen verbaut wird. CKD- und SKD-Fertigung werden vor allem in solchen Ländern durchgeführt, in denen Kraftfahrzeuge nicht als Ganzes importiert, sondern unter einer Wertschöpfung im Land hergestellt werden sollen. Die CKD-Fertigung hat hierbei die höhere Wertschöpfung, jedoch den Nachteil, daß durch den Aufbau einer Lackiererei hohe Kosten entstehen, denen eine unter Umständen nur geringe Stückzahl an Kraftfahrzeugkarosserien pro Jahr gegenüber steht. Bei der SKD-Fertigung liegen die Investitionen durch den Wegfall der Rohbaufertigung und der Lackiererei deutlich geringer, andererseits ist jedoch auch die Wertschöpfung bei der Endmontage verhältnismäßig gering.

Aus der DE 29 23 874 A ist ein Verfahren zum Herstellen einer Fahrzeugkarosserie bekannt, bei dem der Fahrzeugboden mit Einbauten, wie beispielsweise den Sitzen, versehen und mit Rahmenteilen der Karosserie verbunden wird. Die dem zu bildenden Karosserieinnenraum zugewandten Seiten der Karosserie sind hierbei bereits lackiert. Die Verbindung der Bodengruppe mit den Rahmenteilen, die auch noch zum Boden des Kraftfahrzeuges gehören, erfolgt durch Klebung und kann an besonders belasteten Stellen auch durch Schraubverbindungen unterstützt werden. Diese Art der Bodenfertigung bietet zwei Vorteile. Zum einen können unterschiedliche Materialien, wie beispielsweise Kombinationen aus Aluminiumteilen, Kunststoffteilen und/oder Stahlteilen eingesetzt werden, zum anderen ist die Innenmontage der Bodengruppe wegen des noch fehlenden Hutes erleichtert. Der letztere Vorteil liegt auch der DE 38 09 456 C zugrunde, die eine extreme Modulfertigung beschreibt. Hier wird praktisch das gesamte Auto aus einzelnen Modulen zusammengesetzt, wobei wiederum die Bodengruppe incl. der Sitze aufgebaut wird, bevor die Seitenteile der Karosserie und das Dach eingesetzt werden. Die Montage erfolgt hier ringsum durch Schrauben.

Bei den DE-A 34 13 228 und 37 34 208 liegt ebenfalls der Gedanke der Einbauerleichterung der Sitzgruppe und der Armaturentafel zugrunde. Hierbei wird jedoch lediglich die B-Säule der Kraftfahrzeugkarosserie schraubbar ausgeführt, so daß nach dem Entfernen der B-Säule ein breiter Einstieg zur Montage der Armaturentafel und der Sitze zur Verfügung steht. Anschließend wird die B-Säule wieder angeschraubt.

Gemeinsam ist diesen bekannten Modulmontagen von Kraftfahrzeugkarosserien, daß fertiglackierte Karosserieteile zu der Kraftfahrzeugkarosserie zusammengesetzt werden. Die einzelnen Karosserieteile müssen jedoch für diese Art der Montage entsprechend konstruiert werden. D. h., es werden nicht die üblichen Karosserieteile eingesetzt, wie sie beim Zusammenschweißen einer Karosserie verwendet werden, sondern es werden spezielle Schraub- und steckbare Karosserieteile gebildet, die allein durch eine erhebliche Anzahl von Schraublöchern und ggf. angesetzte Gegenmuttern von den üblichen zu verschweißenden Karosserieteilen abweichen. Gemeinsam ist den obigen Fertigungsverfahren auch die übliche Komplettmontage, d. h. die einzelnen Karosserieteile werden lackiert und just in time sequentiell dem Zusammenbauort zugeführt. Da diese Art der Karosseriefertigung gegenüber den geschweißten Karosserien eigenständig entwickelte und gefertigte Karosserieteile benötigt, haben diese Karosseriefertigungsverfahren bislang keinen Einsatz in der Serienfertigung von Kraftfahrzeugen finden können.

Aufgabe der vorliegenden Erfindung ist es, die Kraftfahrzeugfertigung so durchzuführen, daß einerseits mit verhältnismäßig geringen Investitionen, andererseits mit einer verhältnismäßig hohen Wertschöpfung die Endmontage eines Kraftfahrzeugs möglich sein soll.

Die Aufgabe wird gelöst mit einem Verfahren mit den Maßnahmen eines der Ansprüche 1 oder 17.

Die Unteransprüche zeigen besonders bevorzugte Verfahrensweisen bzw. Ausführungsformen, mit denen einerseits eine rationelle Fertigung und ein preiswertes Produkt und andererseits eine hochstabile Karosseriefertigung und entsprechend ein hochstabiles Produkt möglich ist.

Erfindungsgemäß wird die Karosserie aus bereits lackierten Karosserieteilen aufgebaut, die durch nicht-thermische, unlösbare Fügetechniken miteinander verbunden werden. Unlösbare Fügetechniken sind solche, die kein zerstörungsfreies Lösen der Fügestelle zulassen. Thermische Fügeverfahren sind Schweißen und Löten. Unter die erfindungsgemäßen Fügetechniken fallen Kleben, Nieten, insbesondere Stanznieten, Direktverschraubungen, Druckfügen mit oder ohne Schneidanteil, insbesondere Durchsetzfügen ohne Einschneiden. Ganz besonders bevorzugt erfolgt die Verbindung der Karosserieteile durch Kleben und mindestens ein weiteres, nicht-thermisches unlösbares Fügen, wie beispielsweise Nieten, Druckfügen oder Schrauben. D. h., die Verbindungsstellen der Karosserieteile werden miteinander geklebt und vernietet oder geklebt und druckgefügt oder geklebt und verschraubt bzw. eine Kombination hiervon. Erfindungsgemäß weisen die bereits geformten Karosserieteile die Lackschicht nicht nur auf ihren Flächen auf, sondern zumindest auch an ihren äußeren Schneidkanten, bevorzugt auch an inneren Schneidkanten. Wenn für die Fügetechnik in dem Karosserieteil Löcher vorgesehen werden, beispielsweise für CONFIX-Fügungen oder Nieten, so können diese Lochkanten beschichtet oder unbeschichtet sein. Alternativ oder zusätzlich zu den auch an den zumindest äußeren Kanten beschichteten geformten Karosserieteilen wird erfindungsgemäß die Karosserie hergestellt durch Ansetzen der beschichteten und geformten Karosserieteilen an einem Unterbau der Karosserie, der aus Einzelteilen zusammengesetzt und anschließend beschichtet wurde. Der Unterbau bildet die Bodengruppe bzw. die Plattform der Karosserie oder Teile hiervon. Alternativ oder zusätzlich werden bei dem erfindungsgemäßen Verfahren die geformten Karosserieteile im geformten Zustand mit der Lackschicht versehen und anschließend miteinander zusammengefügt.

Anders als im Stand der Technik wird erfindungsgemäß vorteilhaft von Karosserieteilen ausgegangen, die (unlackiert) auch mit Schweißautomaten (-robotern) in einer Serienfertigung zu einer Karosserie verschweißt werden können. Dies erlaubt eine universelle Fertigung der Karosserie, d. h., einerseits - wie in der Serienfertigung von Kraftfahrzeugkarosserien üblich - durch Zusammenschweißen der geformten Karosserieteile und andererseits - unter Einsatz der gleichgeformten Karosserieteile, ggf. mit wenigen zusätzlichen Löchern versehen - durch nicht-thermische unlösbare Fügetechniken, wie sie oben im wesentlichen beschrieben sind. Dies ermöglicht es mit einer Presse (denselben Preßwerkzeugen) gleichermaßen Karosserieteile für Großserienfertigung (Verschweißung) und für die erfindungsgemäße Kleinserienfertigung herzustellen. Hierdurch lassen sich die Fertigungskosten für die Karosserieteile für die nicht-thermische Fügung niedrig halten.

Im Unterschied zum Stand der Technik weist die erfindungsgemäße Fertigung mindestens einen der folgenden fünf Schritte auf:
1. Beim Fügen formt sich ein Verbindungsmittel seinen Weg durch mindestens eines der aneinandergesetzten Karosserieteile selbst.
2. Nach dem Aneinandersetzen der Karosserieteile wird ein Durchsatz von dem einen Karosserieteil durch das andere Karosserieteil geschaffen.
3. Nach dem Aneinandersetzen der Karosserieteile wird in mindestens einem der Karosserieteile ein Loch gebildet, in das ein Verbindungselement eingebracht wird, das die Karosserieteile miteinander verbindet.
4. Fertigen mehrerer gleichartiger der die Lackschicht bereits aufweisender Karosserieteile, Sammeln dieser Karosserieteile in einem Transportgestell, Transportieren des Transportgestells mit den gesammelten Karosserieteilen zu einem Karosseriemontageort, Entnehmen der gesammelten Karosserieteile aus dem Transportgestell und Zusammensetzen der entnommenen Karosserieteilen mit weiteren Karosserieteilen, die ebenso gesammelt und transportiert wurden.
5. Formen der Karosserieteile auf einer Presse mit Werkzeugen, wobei mit denselben Werkzeugen zusätzlich Karosserieteile hergestellt werden, die mit weiteren geformten Karosserieteilen zusammengeschweißt werden.

Zu dem ersten Schritt gehören insbesondere die Fügetechniken, Stanznieten und Direktverschraubungen, beispielsweise Dünnblech-Direktverschraubungen. Die Verbindungsmittel werden auf dem geschlossenen oder mit einer zu kleinen Öffnung versehenen Karosserieteil (Blech) angesetzt und schneiden bzw. bohren sich in dieses hinein. Der zweite Schritt beinhaltet beispielsweise das Durchsetzfügen mit und ohne Einschneiden. Hierbei wird ein Blech in das benachbarte, anliegende Blech hineingeformt, wobei die Bleche miteinander verhaken. Beim dritten Schritt kommen insbesondere Blindnieten zum Einsatz, ggf. auch selbstschneidende Blechverschraubungen. Diese drei Schritte können allesamt erfindungsgemäß an einer Karosserie eingesetzt werden, entsprechend der Zugänglichkeit der miteinander zu verbindenden Karosserieteilen. Wie bereits erwähnt, erfolgen diese Fügungen ganz besonders vorteilhaft in Kombination mit einer Klebung. Gegenüber dem Stand der Technik hat die erfindungsgemäße Fertigung den Vorteil, daß erst eine Ausrichtung der miteinander zu befestigenden Karosserieteile erfolgen kann, bevor dann die endgültige Befestigung (beispielsweise Stanznieten) erfolgt. Hierdurch wird eine sehr gute Formentreue des Kraftfahrzeuges erreicht, die sich u. a. in den Spaltmaßen des Kraftfahrzeuges, aber auch in der Karosseriesteifigkeit und damit einhergehend einer geringen Geräuschentwicklung (Knarren, Quietschen) widerspiegelt. Dies ist bei den Schraubverbindungen gemäß dem Stand der Technik nicht möglich, da hierbei die vorgegebenen Schraublöcher die späteren Abmessungen der Kraftfahrzeugkarosserie bestimmen, wodurch erheblich höhere Toleranzen bedingt sind. Dies kann beim Stand der Technik nur durch verhältnismäßig große Schraublöcher ausgeglichen werden, die jedoch zu einer Instabilität der gesamten Karosserie führen. Dies ist mit ein Grund, warum eine extreme Modulfertigung, wie sie aus der DE 38 09 456 C bekannt ist, sich in der Serienfertigung nicht durchsetzen konnte.

Der vierte und/oder fünfte erfindungsgemäße Schritt ist mit den Schritten 1 bis 3 kombinierbar und beinhaltet eine vorteilhafte Materialführung (Transport) bzw. eine Mischfertigung. Durch diese Materialführung ist es möglich die Karosserieteilfertigung bis hin zur Lackierung an einem Fertigungsort und die Montage an einem hiervon deutlich entfernten Fertigungsort (insbesondere in einem anderen Land) durchzuführen. Im Gegensatz hierzu beschreibt der Stand der Technik Karosseriefertigungen, die an einem Standort stattfinden, so daß die Teile nach der Lackierung nicht mehr gesammelt, sondern einzeln an die Montagelinie (beispielsweise über Hängeförderer) herangeführt werden. Erfindungsgemäß werden gleiche Karosserieteile, die ggf. sich in der Farbe der Lackschicht unterscheiden können, in einem Transportgestell gesammelt. Das Transportgestell kann gleichzeitig als Behälter ausgebildet sein oder wird zum Transport vorteilhaft in einen Behälter eingestellt. Dies erfolgt insbesondere für alle Karosserieteile, d. h. beispielsweise die Seitenteile rechts/links, das Dach und die Dachspriegel. Entsprechend kann auch mit den abnehmbar verbindbaren Karosserieteilen, wie den Türen, Hauben und Kotflügeln verfahren werden. Bei unterschiedlichen Farben erfolgt die Einbringung der unterschiedlichen Karosserieteile in die jeweiligen Transportgestelle vorteilhaft mit derselben Farbsequenz, so daß beim Zusammensetzen der Karosserie am Montageort die Karosserieteile in passender Farbe einzeln aus der Vielzahl an Transportgestellen für die unterschiedlichen Karosserieteile entnommen werden können. Vorzugsweise werden 5 bis 50, insbesondere 10 bis 25 der lackierten Karosserieteile in ein Transportgestell eingebracht.

Die Mischfertigung ist ein besonderer Vorteil der vorliegenden Erfindung. Sie ermöglicht es, an einem Standort auf denselben Anlagen (z. B. mit denselben Werkzeugen wie Matrizen und Patrizen) gleiche Teile zu pressen, die einerseits (insbesondere an Ort und Stelle, d. h. derselben Fertigungsstätte) zu Kraftfahrzeugkarosserien verbaut werden durch Verschweißen der Teile und anschließendes Lackieren der Karosserie und andererseits erst nach dem Lackieren (vorteilhaft auch an dieser Fertigungsstätte) durch das nicht-thermische Fügen zu einer Karosserie (vorteilhaft in einer anderen Fertigungsstätte, insbesondere in einem anderen Staat) zusammengefügt werden.

Mit der erfindungsgemäßen Fertigung wird mit verhältnismäßig geringen Investitionskosten, ausgehend von einer zentralen Fertigung der Karosserieteile, eine dezentrale Montage der Karosserie möglich, wobei die dezentrale Montage auch länderübergreifend erfolgen kann. Der Transport der einzelnen lackierten Karosserieteile erfolgt in einem Transportgestell unter Separierung der einzelnen Teile, so daß ein gegenseitiges Zerkratzen der Oberfläche durch die einzelnen Teile vermieden ist. Auch dies unterscheidet das erfindungsgemäße Verfahren von den bisherigen CKD-Verfahren, bei denen der Transport der einzelnen Karosseriebleche (unlackiert) meist aneinanderliegend erfolgt.

Durch das Kombinieren der Fügetechnik Kleben mit einer mechanischen Fügetechnik wird eine besonders steife Karosserie erhalten. Als mechanische Fügetechnik kommt hier auch das Einbringen von Schrauben in die Verbindungsstelle in Frage, wobei insbesondere selbstschneidende Blechschrauben verwendet werden können und hierbei wiederum solche, die selbstbohrend sind, d. h. sich ihr Loch in das geschlossene Blech selbst formen (Direktverschraubungen). Bevorzugt werden hierbei solche selbstschneidenden Blechschrauben eingesetzt, die sich aus dem Blech einen Einzug (Kragen) formen, in den sie sich nachfolgend ein Gewinde einschneiden. Auch das Stanznieten ist insbesondere in Verbindung mit dem Kleben eine bevorzugte Fügetechnik, da auch hier die Niet sich ihr Nietloch selbst in das geschlossene Blech formt.

Erfindungsgemäß können für die Herstellung der Karosserieteile Bleche eingesetzt werden, die im Coil-Coating-Verfahren vorbeschichtet sind, wobei die Vorbeschichtung auch alle erforderlichen Lackschichten enthalten kann. Solche Bleche werden dann entweder nach dem Ausstanzen oder insbesondere nach dem Umformen an ihren Schneidkanten nachbeschichtet und dann erst zusammengefügt. Das heißt, erfindungsgemäß erfolgt hier eine Einzelbeschichtung der Karosserieteile und nicht eine Gesamtbeschichtung der Karosserie zur Behandlung der Schnittkanten.

Bevorzugt wird jedoch erfindungsgemäß so verfahren, daß die Einzelteile erst aus einem Blechband herausgestanzt, anschließend umgeformt und danach lackiert werden. Auch hierbei ist wiederum wesentlich, daß die einzelnen Karosserieteile und nicht ausschließlich die gesamte Karosserie beschichtet werden.

Wenn bei den Fügetechniken solche zum Einsatz kommen, die zu offenen Metallflächen führen, beispielsweise einschneidende Fügetechniken, dann werden die Fügestellen, vorzugsweise sofort nach ihrer Herstellung, mit einem Korrosionsschutz versehen (nachbeschichtet). Hierdurch bleibt der gesamte Korrosionsschutz erhalten. Vorteilhaft wird der Korrosionsschutz durch die kombinierte Fügung mit einem Kleber erreicht, der die offenen Metallflächen versiegelt.

Bevorzugt werden nicht sämtliche Blechteile der Karosserie durch nicht-thermisches Fügen zusammengesetzt, sondern es wird ein Mischaufbau durchgeführt. Das heißt, einige Einzelteile der Karosserie werden durch Schweißen zu einem Karosserieteil beziehungsweise einer Karosserieuntereinheit zusammengefügt, um dann anschließend lackiert zu werden. Als eine solche Karosserieuntereinheit eignet sich insbesondere der Unterbau der Kraftfahrzeugkarosserie. Der Unterbau kann hierbei vorteilhaft auch in einer Einheitsfarbe beschichtet sein, unabhängig von der Farbe der Außenhaut des Kraftfahrzeugs. Dies ist möglich, da der Unterbau bei der weiteren Montage des Kraftfahrzeugs von diversen Teilen, wie Teppichboden, Armaturentafel etc. verdeckt wird.

Bei der vorliegenden Erfindung werden vorzugsweise aus den lackierten Komponenten Unterbau. Seitenteile, Dach und Dachspriegel mittels Stanznieten (oder auch Nieten, Durchsetzfügen oder Schraube) und Kleben eine gefügte Karosse aufgebaut, die nach Ergänzen mit den lackierten Anbauteilen (Kotflügel, Türen, Klappen vorn und hinten) eine (montage)fertige Karosserie ist. Diese CPKD-Fertigung (completely painted knocked down) ist der CKD-Fertigung ähnlich, hat jedoch nicht die für die CKD-Fertigung notwendigen hohen Investitionen durch Aufbau einer vollständigen Rohbaufertigung und Lackiererei, die kostenintensiv aber nicht personalintensiv sind. Bei der CPKD-Fertigung werden die Komponenten vorzugsweise von Hand aneinandergesetzt, verspannt und gefügt, wobei verhältnismäßige einfache Fügetechniken zum Einsatz kommen können. Mittels CPKD kann auch kurzfristig ein Modellwechsel durchgeführt werden und ist eine Fertigung, insbesondere für eine niedrige Stückzahl pro Jahr (bis 20.000, vorteilhaft bis 12.000 und insbesondere bis 8.000) schnell aufbaubar.

Ein bevorzugter Ablauf der CPKD-Fertigung ist wie folgt:
- Blecheinzelteile fertigen, evtl. aus Coil-Coated Blechen;
- Fertigen der Komponenten Unterbau, Seitenteile, Dach, Dachspriegel;
- Schwarzlackieren des Unterbaus und gegebenenfalls der Dachspriegel, Farbiglackieren der Außenhautteile;
- Verpacken und Versand der Teile zum Fertigungsort;
- Zusammenfügen der lackierten Karosserieteile durch Kleben und eine weitere Fügetechnik;
- Lack-Nacharbeiten, Feinabdichten;
- Karosse mit den lackierten Anbauteilen (Kotflügel, Türen, Klappen vorn und hinten) ergänzen;
   und
- Montage zum kompletten Kraftfahrzeug.

Hierbei wird erneut der Unterschied zum Stand der Technik deutlich, in dem die Montage zum kompletten Kraftfahrzeug, d. h. der vollständige Einbau der Inneneinrichtung wie Teppichboden, Sitze und Armaturentafel sowie des Himmels vor dem Zusammenfügen der lackierten Karosserieteile erfolgt. Erfindungsgemäß erfolgt höchstens eine Teilmontage, insbesondere nur eines geringen Teils der Innenausstattung, wie beispielsweise des Teppichbodens.

Zur Steigerung der Fertigungstiefe am Fertigungsort kann dort ein kleiner Rohbau für die Herstellung des Unterbaus und/oder eine einfache Lackieranlage hierfür errichtet werden. Bis auf die Lackierung der Außenhaut ist dann die gesamte Montagefertigung am Herstellungsort.

Die Erfindung wird im folgenden anhand eines Ausführungsbeispiels und Zeichnungen näher beschrieben.

Es zeigen
- Figur 1: verschiedene Fügeverfahren;
- Figur 2: den Gesamtablauf der Kraftfahrzeugfertigung;
- Figur 3: eine detaillierte Darstellung des Karosserieaufbaus; und
- Figur 4: eine detaillierte Darstellung des Karosserie-Finish.

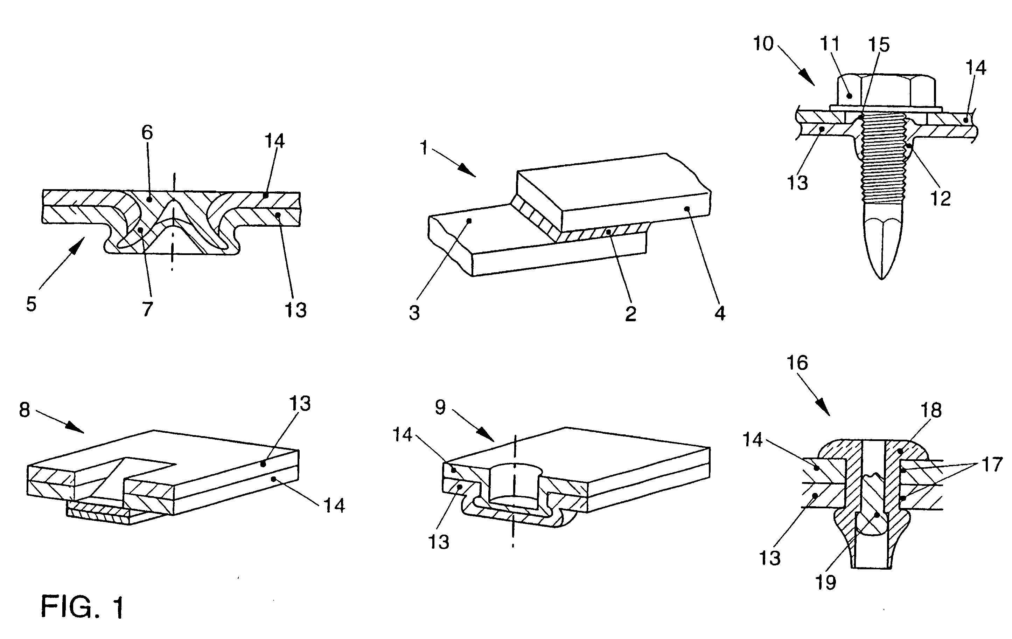

In der in Figur 1 dargestellten Auswahl an Fügetechniken ist das Kleben 1 das wichtigste Verfahren in der vorliegenden Erfindung. Hierbei wird mittels einer Kleberschicht 2 eine unlösbare Verbindung zwischen zwei Karosserieteilen 3 und 4 hergestellt. Als Kleber eignen sich übliche Kleber, wie sie in der Kraftfahrzeugkarosserie zum Einsatz kommen, insbesondere solche auf Polyurethan-, Epoxid- oder (Meth)acrylatbasis. Die Fügung ist nur durch Zerstörung der Kleberschicht wieder lösbar. Das Kleben 1 kommt vorzugsweise über mehr als 40 % der Berührflächen zwischen den einzelnen Karosserieteilen und insbesondere über mehr als 70 % der Berührflächen zum Einsatz.

Das Stanznieten 5 ist eine weitere wichtige Fügetechnik in der vorliegenden Erfindung. Hierbei werden die Karosserieteile 13 und 14 durch eine Niet 6 verbunden, die sich ihr Stanzloch 7 selbst schneidet (kein vorgelochtes Blech 14). Das Stanznieten 5 kann ohne den Einsatz einer Klebung 1 zum Einsatz kommen, vorzugsweise wird jedoch das Stanznieten 5 auf einer Verklebung 1 durchgeführt, wodurch zum einen die verklebten Karosserieteile 3 und 4 sofort fixiert und zum anderen die Kleberschicht 2 stabilisiert wird, wodurch höchste Festigkeiten erreicht werden. Hierdurch wird die fertige Karosserie besonders steif.

Beim Durchsetzfügen wird kein die beiden Karosserieteile verbindendes Element (wie z. B. Niet 6 oder Kleber 2) benötigt. Unterschieden werden hierbei Durchsetzfügen mit Einschneiden 8 und Durchsetzfügen ohne Einschneiden 9. Das Durchsetzfügen kann, wie das Stanznieten, ohne, jedoch vorzugsweise zusammen mit einer Kleberschicht zum Einsatz kommen, wobei das Durchsetzfügen dann wie das Stanznieten auf der Klebung zum Einsatz kommt.

Bei der Dünnblech-Direktverschraubung 10 wird eine Schraube 11 durch mindestens eines der Bleche, hier das untere Blech 13 hindurchgebohrt, wobei die Schraube 11 einen Kragen 12 in das Blech 13 formt. Der Kragen 12 erstreckt sich über mehrere Gewindegänge der Schraube, so daß die Schraube einen guten Halt findet. Vorteilhaft ist bei dieser Art der Verschraubung in das obere Blech 14 ein Loch 15 bereits vor der Verschraubung eingeformt, so daß die Schraube 11 sich nur durch das untere Blech 13 schneidet. Wegen der hohen Festigkeitsansprüche, die an eine Kraftfahrzeugkarosserie bestellt werden, handelt es sich bei dieser Art von Verschraubung prinzipiell um eine Einmalverschraubung, d. h. nach dem Lösen dieser Verschraubung wird beim erneuten Eindrehen der Schraube nicht mehr die Festigkeit der Erstverschraubung erreicht, so daß zusätzliche Verschraubungen (bzw. andere Fügungen) anzubringen sind.

Als weitere Fügetechnik kann das Blindnieten 16 eingesetzt werden. Hier wird nach dem Zusammenfügen der Bleche 13 und 14 durch beide ein Loch 17 gebohrt, in das eine Blindniete 18 eingesetzt wird. Durch Einziehen des Aufweitungsstiftes 19 durch die Blindniete 18 wird das untere Ende der Blindniete 18 aufgeweitet und sorgt so für einen festen Zusammenhalt der Bleche 13 und 14. Auch bei der Dünn-Blechverschraubung 10 und der Blindniete 16 erfolgt vorzugsweise gleichzeitig eine Verklebung der Bleche 13 und 14.

Die Kleberschicht hat den Vorteil, daß sie auf den Karosserieteilen im Bereich der Fügung 5, 8 oder 9 einen Korrosionsschutz bildet. Vorzugsweise wird jedoch auf der fertigen Fügung 5, 8 bzw. 9 nach dem Fügevorgang noch ein Korrosionsschutz aufgebracht.

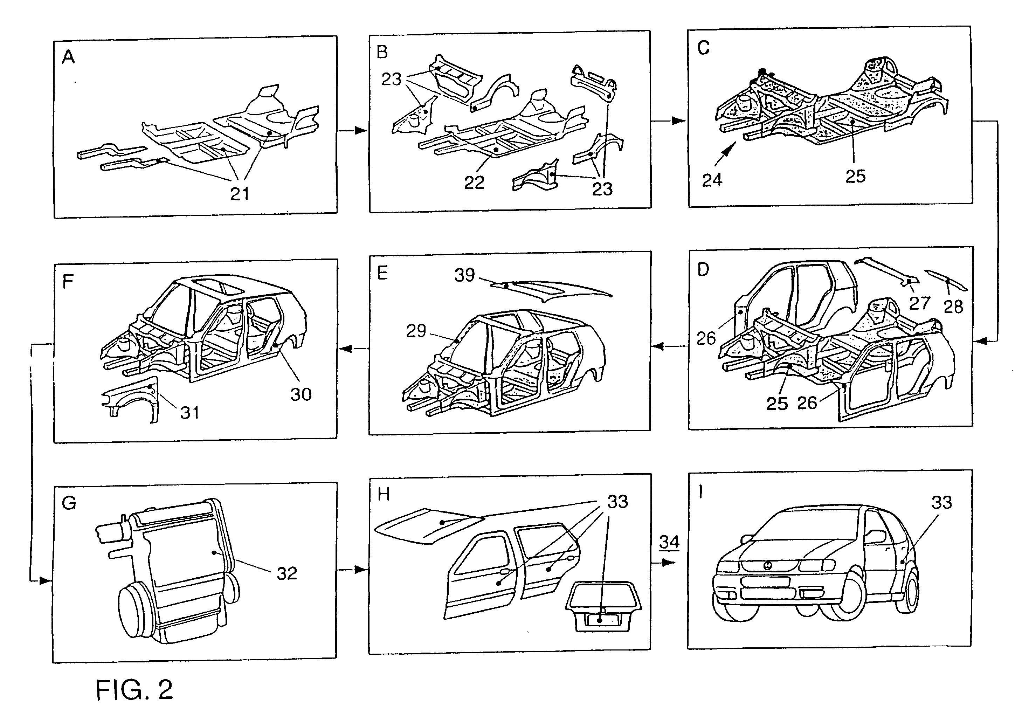

Der gesamte Fertigungsablauf, wie er in Figur 2 dargestellt ist, ist wie folgt: (A) mehrere geformte Blechteile 21 (und ggf. auch Profilteile) werden miteinander verschweißt zu einem Unterbau I 22 (B). Dieser Unterbau I 22 wird mit weiteren geformten Blechteilen 23 zu einem Unterbau II 24 verschweißt. Der Unterbau II 24 wird anschließend lackiert 25 (C), wobei hier insbesondere eine Tauchlackierung geeignet ist. Besonders vorteilhaft ist hierbei eine Mehrschichtlackierung, beispielsweise zuerst eine Phosphatierung, dann eine kataphoretische Tauchlackierung und anschließend eine Farblackierung, wobei die Unterseite des Unterbaus II 25 vorzugsweise noch mit einem Unterbodenschutz behandelt werden kann. An die Farbe für den Unterbau II 24 werden keine besonderen optischen Ansprüche gestellt, da der Unterbau II 24 vorzugsweise so gewählt ist, daß er keine oder nur geringe Sichtflächen hat, d. h. Flächen, die beim Gebrauch des späteren Kraftfahrzeugs von außen sichtbar sind.

Anschließend (D) werden an den lackierten Unterbau II 25 geformte und lackierte Seitenteile 26 angesetzt und durch Kleben und Stanznieten mit diesem verbunden. Zur Stabilisierung der Seitenteile werden diese oben mit einem vorderen 27 und einem hinteren 28 lackierten Dachquerträger. ebenfalls durch Kleben und Stanznieten stabilisiert. Anschließend wird auf die so gebildete Karosse 29 (E) das Dach 39 aufgesetzt, das wiederum durch Kleben und Stanznieten mit den Seitenteilen 26 und den Dachquerträgern 27, 28 verbunden wird. Hier ist der Aufbau der Karosse 30 beendet.

An die Karosse 30 werden in einem Finish (F) Anbauteile, wie beispielsweise vordere Kotflügel 31 montiert. Hier und/oder in den vorherigen Schritten finden auch Lacknacharbeiten und Feinabdichtungen statt. In einem nächsten Schritt (G) erfolgt die Komplettierung 32, d. h. in die Karosserie werden Motor, Getriebe, Räder, Innenausstattung (Teppichboden, Sitze, Armaturentafel, Lenkrad) etc. eingebaut. Dem schließt sich ein letzter Fertigungsschritt (H) an, in dem Türen- und Klappenmodule zur Bildung eines fertiggestellten Kraftfahrzeugs 33 angebaut werden. Nach einer Kontrolle 34 ist das Kraftfahrzeug 33 verkaufsfertig.

Von dem dargestellten Fertigungsablauf sind verschiedene Varianten bzw. Abweichungen möglich. So können die Bleche 21, 23 und insbesondere auch 26, 39 bereits durch Coil Coating lackiert sein, wobei dann besonders die Bleche 26 und 39 an ihren Schnittkanten vor dem Zusammenfügen nachbehandelt, d. h. gegen Korrosion gesichert werden. Ferner können außerdem die Türen und Klappen auch während der Montage (G) angebaut sein.

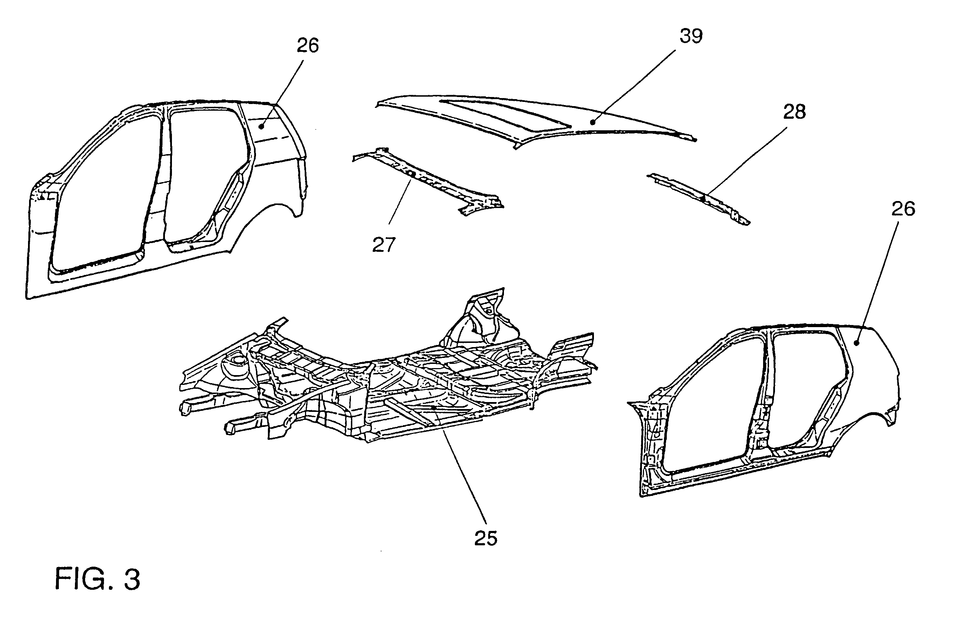

Figur 3 zeigt detailliert die Teile, die in den Schritten D und E zum Aufbau der Karosse 30 zusammengefügt werden. An den beispielsweise schwarzlackierten Unterbau II 25 werden unter Zwischenfügen einer Kleberschicht die Seitenteile 26 angesetzt und fixiert. Anschließend wird durch Stanz- oder Druckfügen oder mittels selbstschneidenden Blechschrauben die Verklebung der Teile 25 und 26 stabilisiert, wobei auch eine Kombination dieser Fügetechniken möglich ist, insbesondere entsprechend der Zugänglichkeit der miteinander zu verbindenden Bereiche. Danach werden die Dachquerträger 27 und 28 an die Seitenteile 26 angesetzt und ebenfalls durch Kleben und weitere Fügetechniken wie Stanznieten fest verbunden. Auf die so fertiggestellte Teilkarosse 29 wird das Dach 39 aufgesetzt und wiederum durch Kleben und mindesten eine weitere Fügetechnik, beispielsweise Stanznieten, mit den Seitenteilen 26 und den Dachquerträgern 27 und 28 verbunden. Durch den Einsatz des fertig lackierten Unterbaus II 25, sowie der vorlackierten Seiten- und Dachteile 26 bis 28, 39 kann der übliche Lackierprozeß hier eingespart werden, d. h. die Karosserie enthält hier bereits ihren wesentlichen Korrosionsschutz, wobei vorteilhaft nur noch Lacknacharbeiten und Feinabdichtungen bzw. die mechanischen Fügeverbindungen nachzubehandeln sind. Hierzu ist keine Ganzkarosseriebehandlung mehr notwendig, insbesondere wenn die Blechteile auch an ihren Schnittkanten bereits voll korrosionsgeschützt sind. Dies unterscheidet die vorliegende Erfindung auch von dem bisherigen Einsatz von Coil Coating Teilen im Kraftfahrzeugbereich. Gewünschtenfalls sind jedoch einfache Ganz- oder Teillackierungen, wie beispielsweise der Auftrag eines Klarlacks, möglich.

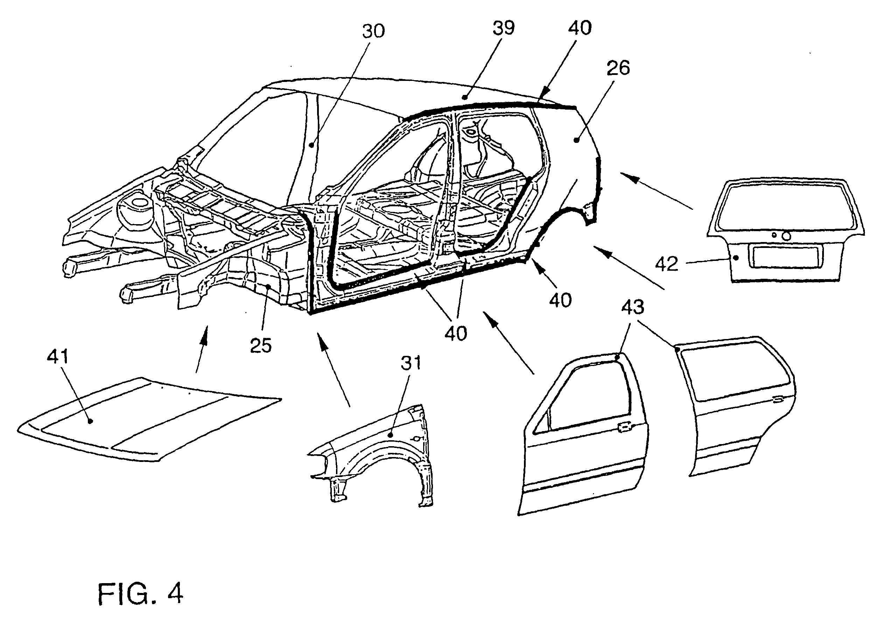

In Figur 4 sind die Fertigungsschritte F und H im Detail dargestellt. An der fertigen Karosse 30 sind die Klebe- und mechanischen Fügestellen 40 hervorgehoben (an nur einen Seite). Durch den Anbau der Klappen 41, 42 und der Türen 43 erhält man die vollständige Karosserie. Durch den Einsatz des vorgefertigten Unterbaus II 25 ist es möglich, daß mit verhältnismäßig einfachen, insbesondere manuell durchführbaren Fertigungsschritten die vollständige Karosse 30 aufgebaut werden kann. Hierdurch wird mit verhältnismäßig geringen Investitionen eine Karosseriefertigung vor Ort möglich, insbesondere ist kein aufwendiger automatisierter Rohbau und keine aufwendige, ebenfalls weitgehend automatisierte Lackiererei zur Behandlung der fertigen Karosse notwendig. Die verschiedenen Einzelteile, wie Unterbau II 24, Seitenteile 26, Dach 39, Hauben 41, Klappen 42, Türen 43 und Kotflügel 31 können zentral lackiert und an mehreren unterschiedlichen Standorten zu fertigen Karosserien bzw. Kraftfahrzeugen zusammengesetzt werden.

Die Erfindung eignet sich insbesondere zum Aufbau von Kraftfahrzeugen an Standorten, an denen mit verhältnismäßig geringen Investitionen verhältnismäßig wenig Fahrzeuge pro Jahr möglichst vollständig, d. h. nicht durch Semi Knocked Down-Verfahren, aufgebaut werden sollen.

## Patentansprüche

1. Verfahren zum Herstellen einer mit einer Lackschicht, die mindestens eine der Eigenschaften farbgebend, korrosionsschützend, endgültig oder nicht elektrisch schweißbar aufweist, beschichteten Karosserie, mit den Schritten:
Herstellen geformter, die Lackschicht bereits aufweisender Karosserieteile, und Zusammensetzen der die Lackschicht bereits aufweisenden Karosserieteile durch nicht-thermisches unlösbares Fügen zu der mit der Lackschicht beschichteten Karosserie,
wobei die geformten Karosserieteile die Lackschicht auch an ihren äußeren Schneidkanten aufweisen,
**dadurch gekennzeichnet, dass** die Karosserieteile auf einer Presse mit Werkzeugen geformt werden, wobei mit denselben Werkzeugen zusätzlich Karosserieteile hergestellt werden, die unlackiert mit weiteren anders geformten unlackierten Karosserieteilen zusammengeschweißt werden.

2. Verfahren nach Anspruch 1, **dadurch gekennzeichnet, dass** die geformten Karosserieteile an einen aus Einzelteilen zusammengesetzten Unterbau angesetzt werden, der nach dem Zusammensetzen beschichtet wurde.

3. Verfahren nach Anspruch 1 oder 2, **dadurch gekennzeichnet, dass** die Lackschicht nach dem Formen und vor dem Fügen auf das Karosserieteil aufgebracht wird.

4. Verfahren nach einem der Ansprüche 1 bis 3, **dadurch gekennzeichnet, dass** sich beim Fügen ein Verbindungsmittel seinen Weg durch mindestens eines der aneinandergesetzten Karosserieteile selbst formt.

5. Verfahren nach einem der Ansprüche 1 bis 4, **dadurch gekennzeichnet, dass** nach dem Aneinandersetzen der Karosserieteile ein Durchsatz von dem einen Karosserieteil durch das andere Karosserieteil geschaffen wird.

6. Verfahren nach einem der Ansprüche 1 bis 5, **dadurch gekennzeichnet, dass** nach dem Aneinandersetzen der Karosserieteile in mindestens einem der Karosserieteile ein Loch gebildet wird, in das ein Verbindungselement eingebracht wird, das die Karosserieteile miteinander verbindet.

7. Verfahren nach Anspruch 1, **dadurch gekennzeichnet, dass** zum nicht-thermischen unlösbaren Fügen Kleben in Verbindung mit einer weiteren Fügetechnik eingesetzt wird.

8. Verfahren nach Anspruch 7, **dadurch gekennzeichnet, dass** als weitere Fügetechnik Nieten und/oder Druckfügen eingesetzt wird.

9. Verfahren nach Anspruch 8, **dadurch gekennzeichnet, dass** das Druckfügen mit oder ohne Schneidanteil durchgeführt wird, insbesondere als Durchsetzfügen ohne Einschneiden.

10. Verfahren nach Anspruch 8, **dadurch gekennzeichnet, dass** beim Fügen stanzgenietet wird.

11. Verfahren nach einem der vorhergehenden Ansprüche, **dadurch gekennzeichnet, dass** die Lackschicht im Coil-Coating-Verfahren aufgebracht wird.

12. Verfahren nach einem der vorhergehenden Ansprüche, **dadurch gekennzeichnet, dass** beim Fügen verformte Blechbereiche nachbeschichtet werden.

13. Verfahren nach einem der vorhergehenden Ansprüche, **dadurch gekennzeichnet, dass** Karosserieteile, bevor sie mit der Lackschicht versehen werden, aus Einzelteilen zu Karosserieuntereinheiten zusammengeschweißt werden.

14. Verfahren nach Anspruch 13, **dadurch gekennzeichnet, dass** der Unterbau der Karosserie durch Schweißen einzelner, die Lackschicht nicht aufweisender Unterbau-Einzelteile hergestellt und anschließend vor dem Anfügen der die Lackschicht aufweisenden Karosserieteile mit der Lackschicht versehen wird.

15. Verfahren nach einem der vorhergehenden Ansprüche, **dadurch gekennzeichnet, dass** der Unterbau mit einer anderen Lackschicht versehen wird als andere Karosserieteile.

16. Verfahren nach einem der vorhergehenden Ansprüche, **dadurch gekennzeichnet, dass** als Karosserieteil der Unterbau und/oder die Seitenteile und/oder das Dach und/oder Dachquerträger der Karosserie eingesetzt werden.

17. Verfahren zur Mischfertigung einer mit einer Lackschicht versehenen geformten Karosserie beziehungsweise Karosserieuntereinheit mit den Schritten:
- Formen einer Serie gleichgeformter Karosserieteile;
- Entnehmen einer Teilmenge der Serie, Verschweißen dieser Karosserieteile mit weiteren, anderen geformten Karosserieteilen zu einer Karosserie oder Karosserieuntereinheit und Lackieren dieser Karosserie oder Karosserieuntereinheit;
- Entnehmen einer weiteren Teilmenge der Serie und Lackieren dieser Karosserieteile zu dem mit der Lackschicht versehenen geformten Karosserieteil vor einem Zusammenfügen zu einer Karosserie oder Karosserieuntereinheit.

18. Verfahren nach Anspruch 1 oder 17, **dadurch gekennzeichnet, dass** mehrere gleichartige, die Lackschicht bereits aufweisende Karosserieteile in einem Transportgestell gesammelt werden, das Transportgestell mit den gesammelten Karosserieteilen zu einem Karosseriemontageort transportiert wird, die gesammelten Karosserieteile aus dem Transportgestell entnommen und die entnommenen Karosserieteile mit weiteren Karosserieteilen zusammengesetzt werden, die ebenso gesammelt und transportiert wurden.

## Claims

1. Method for the production of a body coated with a lacquer layer which has at least one of the properties of being colouring, corrosion-protecting and finally or nonelectrically weldable, having the steps: production of shaped body parts already having the lacquer layer and assembly of the body parts already having the lacquer layer by non-thermal unreleasable joining to the body coated with the lacquer layer, the shaped body parts having the lacquer layer also at their outer cutting edges, **characterized in that** the body parts are shaped on a press by means of dies, the same dies additionally producing body parts which, unlacquered, are welded together with further differently shaped unlacquered body parts.

2. Method according to Claim 1, **characterized in that** the shaped body parts are attached to a substructure which is assembled from individual parts and which has been coated after assembly.

3. Method according to Claim 1 or 2, **characterized in that** the lacquer layer is applied to the body part after shaping and before joining.

4. Method according to one of Claims 1 to 3, **characterized in that**, during joining, a connection means itself shapes its path through at least one of the body parts placed against one another.

5. Method according to one of Claims 1 to 4, **characterized in that**, after the body parts have been placed against one another, a passage from one body part through the other body part is afforded.

6. Method according to one of Claims 1 to 5, **characterized in that**, after the body parts have been placed against one another, a hole, into which a connection element connecting the body parts to one another is introduced, is formed in at least one of the body parts.

7. Method according to Claim 1, **characterized in that** adhesive bonding in conjunction with a further joining technique is used for the non-thermal unreleasable joining.

8. Method according to Claim 7, **characterized in that** the further joining technique used is riveting and/or compression-joining.

9. Method according to Claim 8, **characterized in that** the compression-joining is carried out with or without a cutting content, in particular as passage-joining without cutting-in.

10. Method according to Claim 8, **characterized in that** punch-riveting is carried out during joining.

11. Method according to one of the preceding claims, **characterized in that** the lacquer layer is applied by the coil-coating method.

12. Method according to one of the preceding claims, **characterized in that** panel regions deformed during joining are recoated.

13. Method according to one of the preceding claims, **characterized in that** body parts, before being provided with the lacquer layer, are welded together from individual parts to form body subunits.

14. Method according to Claim 13, **characterized in that** the substructure of the body is produced by the welding of individual substructure individual parts not having the lacquer layer and is subsequently provided with the lacquer layer before the joining of the body parts having the lacquer layer.

15. Method according to one of the preceding claims, **characterized in that** the substructure is provided with a lacquer layer other than that of other body parts.

16. Method according to one of the preceding claims, **characterized in that** the substructure and/or the side parts and/or the roof and/or the roof crossmember of the body are used as a body part.

17. Method for the co-manufacture of a shaped body or body subunit provided with a lacquer layer, having the steps:
- shaping of a series of identically shaped body parts;
- extraction of a part-quantity of the series, welding of these body parts to further other shaped body parts to form a body or body subunit, and lacquering of this body or body subunit;
- extraction of a further part-quantity of the series and lacquering of these body parts to form the shaped body part provided with the lacquer layer, before joining together to form a body or body subunit.

18. Method according to Claim 1 or 17, **characterized in that** a plurality of identical body parts already having the lacquer layer are collected in a transport rack, the transport rack, together with the collected body parts, is transported to a body assembly location, the collected body parts are extracted from the transport rack, and the extracted body parts are assembled together with further body parts which have likewise been collected and transported.

## Revendications

1. Procédé de fabrication d'une carrosserie revêtue d'une couche de peinture qui présente au moins l'une des caractéristiques de coloration, de protection contre la corrosion, de soudabilité électrique finale ou non, comprenant les étapes suivantes :
fabrication de pièces de carrosserie mises en forme, présentant déjà la couche de peinture et assemblage des pièces de carrosserie présentant déjà la couche de peinture par assemblage non desserrable non thermique à la carrosserie revêtue de la couche de peinture,
les pièces de carrosserie mises en forme présentant la couche de peinture également sur leurs arêtes de coupe extérieures,
**caractérisé en ce que** les pièces de carrosserie sont mises en forme sur une presse avec des outils, ces mêmes outils permettant de fabriquer en outre des pièces de carrosserie qui sont soudées sans être peintes conjointement à d'autres pièces de carrosserie non peintes mises en forme d'une manière différente.

2. Procédé selon la revendication 1, **caractérisé en ce que** les pièces de carrosserie mises en forme sont ajoutées à un châssis assemblé à partir de pièces individuelles, lequel a été revêtu après l'assemblage.

3. Procédé selon la revendication 1 ou 2, **caractérisé en ce que** la couche de peinture est appliquée sur la pièce de la carrosserie après la mise en forme et avant l'assemblage.

4. Procédé selon l'une quelconque des revendications 1 à 3, **caractérisé en ce que** lors de l'assemblage, un moyen de liaison forme lui même son chemin à travers au moins une des pièces de carrosserie adjacentes.

5. Procédé selon l'une quelconque des revendications 1 à 4, **caractérisé en ce qu'**après le positionnement l'une contre l'autre des pièces de carrosserie, un passage est créé par l'une des pièces de la carrosserie à travers l'autre pièce de carrosserie.

6. Procédé selon l'une quelconque des revendications 1 à 5, **caractérisé en ce qu'**après le positionnement l'une contre l'autre des pièces de carrosserie, un trou est formé dans au moins l'une des pièces de carrosserie, dans lequel on introduit un élément d'assemblage qui relie entre elles les pièces de carrosserie.

7. Procédé selon la revendication 1, **caractérisé en ce que** pour l'assemblage non desserrable non thermique, on utilise de l'adhésif conjointement avec une autre technique d'assemblage.

8. Procédé selon la revendication 7, **caractérisé en ce que** l'on utilise en tant que technique d'assemblage supplémentaire des rivets et/ou des assemblages par pression.

9. Procédé selon la revendication 8, **caractérisé en ce que** l'assemblage par pression est réalisé avec ou sans étape de découpage, en particulier sous forme d'assemblage traversant sans découpages.

10. Procédé selon la revendication 8, **caractérisé en ce que** l'on effectue un rivetage par poinçon pour l'assemblage.

11. Procédé selon l'une quelconque des revendications précédentes, **caractérisé en ce que** la couche de peinture est appliquée par le procédé de coil coating (prélaquage).

12. Procédé selon l'une quelconque des revendications précédentes, **caractérisé en ce que** lors de l'assemblage, des régions de tôle déformées sont à nouveau revêtues.

13. Procédé selon l'une quelconque des revendications précédentes, **caractérisé en ce que** les pièces de carrosserie, avant d'être pourvues d'une couche de peinture, sont soudées ensemble à partir de pièces individuelles pour former des sous-unités de carrosserie.

14. Procédé selon la revendication 13, **caractérisé en ce que** le châssis de la carrosserie est fabriqué par soudage de pièces individuelles de châssis séparées, non revêtues de la couche de peinture, et est ensuite pourvu de la couche de peinture avant l'assemblage des pièces de carrosserie revêtues de la couche de peinture.

15. Procédé selon l'une quelconque des revendications précédentes, **caractérisé en ce que** le châssis est pourvu d'une couche de peinture différente des autres pièces de carrosserie.

16. Procédé selon l'une quelconque des revendications précédentes, **caractérisé en ce que** l'on utilise comme pièce de carrosserie le châssis et/ou les pièces latérales et/ou le toit et/ou les supports transversaux du toit de la carrosserie.

17. Procédé de fabrication mixte d'une carrosserie mise en forme et pourvue d'une couche de peinture, respectivement d'une sous-unité de carrosserie, comprenant les étapes suivantes :
- mise en forme d'une série de pièces de carrosserie formées de manière identique ;
- prélèvement d'une quantité partielle de la série, soudage de ces pièces de carrosserie à d'autres pièces de carrosserie différentes mises en forme pour former une carrosserie ou une sous-unité de carrosserie et laquage de cette carrosserie ou de cette sous-unité de carrosserie ;
- prélèvement d'une autre quantité partielle de la série et laquage de ces pièces de carrosserie pour former la pièce dé carrosserie formée pourvue de la couche de peinture avant un assemblage pour donner une carrosserie ou une sous-unité de carrosserie.

18. Procédé selon la revendication 1 ou 17, **caractérisé en ce que** l'on rassemble plusieurs pièces de carrosserie identiques, présentant déjà la couche de peinture dans un bâti de transport, le bâti de transport est transporté avec les pièces de carrosserie rassemblées vers un lieu de montage de la carrosserie, les pièces de carrosserie rassemblées sont prélevées du bâti de transport et les pièces de carrosserie prélevées sont assemblées à d'autres pièces de carrosserie qui ont également été rassemblées et transportées.
